(19) Europäisches Patentamt / European Patent Office / Office européen des brevets

(11) **EP 3 974 278 B1**

(12) **EUROPEAN PATENT SPECIFICATION**

(45) Date of publication and mention of the grant of the patent:
**15.05.2024 Bulletin 2024/20**

(21) Application number: **20808905.2**

(22) Date of filing: **22.05.2020**

(51) International Patent Classification (IPC):
**B61B 13/10** $^{(2006.01)}$ **E01B 25/00** $^{(2006.01)}$

(52) Cooperative Patent Classification (CPC):
**B61B 13/10; E01B 25/00;** Y02T 30/00

(86) International application number:
**PCT/BY2020/000005**

(87) International publication number:
**WO 2020/232524 (26.11.2020 Gazette 2020/48)**

(54) **HIGH-SPEED TRANSPORT SYSTEM**

HOCHGESCHWINDIGKEITSTRANSPORTSYSTEM

COMPLEXE DE TRANSPORT À HYPER-VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2019 EA 201900379**

(43) Date of publication of application:
**30.03.2022 Bulletin 2022/13**

(73) Proprietor: **Unitsky, Anatoli Eduardovich**
**222838, Minsk region, Pukhovichi district (BY)**

(72) Inventor: **Unitsky, Anatoli Eduardovich**
**222838, Minsk region, Pukhovichi district (BY)**

(74) Representative: **Winter, Brandl - Partnerschaft mbB**
**Alois-Steinecker-Straße 22**
**85354 Freising (DE)**

(56) References cited:
**RU-C1- 2 080 268      RU-C1- 2 498 102**
**RU-C1- 2 643 904      RU-C1- 2 668 367**
**US-A1- 2017 197 639      US-B1- 10 286 928**

## Description

## Technical field

The present invention is related to the field of high-speed transport, in particular - to main-line transport systems for transportation of passengers and goods, providing movement in space along trajectory specified by rail of track structure.

## Background Art

The idea of a vacuum tube train was patented back in 1835 by the English scientist Henry Pinkus and this direction of development of high-speed rail transport is constantly improving.

Supersonic ground transport system by Yansufin is known, comprising a vehicle with cars equipped at the bottom with a linear motor rotor, super electromagnets and super-permanent magnets. The stator of the linear motor is installed on the supports built on the track and is made with a superconductor winding cooled by liquid helium, as well as with super electromagnets and super-permanent magnets oriented by poles with the possibility of creating a magnetic cushion. All-metal airtight main tube is installed on the supports, made up of separate tubes hermetically connected to each other by means of annular bellows. Gates are made at end and intermediate stopping points of vehicle. Cars are equipped with outwardly-opening doors. Along the entire length of the track, vacuum pumps adjusted for automatic operation are installed on the main tube, and wind-driven generators [1] are installed on top of the main tube, predominantly at the joints of separate tubes. US 2017/197639 A1 describes another tube transport system whereby the tube is filled with hydrogen gas.

The disadvantage of such a transport system is the low efficiency and high cost of infrastructure to ensure vehicle levitation in extended sections of the track structure.

A transport system is also known, which consists of an aircraft vehicle and an electric transport line. The vehicle consists of cars connected to each other by inter-car walkways. Vehicle body consists of separate compartments and is filled with gas lighter than air. Cars consist of passenger cabins and cargo compartments. There are height regulator and steering rudders, an electric aeroturbine. Electric transport line includes transport masts and rails. A carriage slides along the rails, transmitting electricity through conductive brushes from the rail, through which voltage is supplied to the vehicle. Ahead of the vehicle, cleaning knives are positioned that prepare and clean the rails from external pollution. In the event of an accident, the vehicle shall be fired off the line [2].

The disadvantage of such a transport system is a significant increase in air resistance at high vehicle speeds, which leads to substantial unjustified costs when using this transport system.

The rail track is positioned in reinforced concrete overpass of closed type in aboveground or underground position. The aircraft fuselage is used as cars, for lateral stability of cars on the curved sections of the rail track above the cars in the overpass there is a special rail enclosed by rollers mounted on the roof of the cars. The rail track at the start of the movement is directed downhill, which, when moving back, is an uphill and helps to carry out more effective braking at the end of the track, and, for the same purpose, air is sucked from the overpass from the side of the destination station and air is pumped from the side of the departure station [3].

However, the abovementioned prior art does not fully utilize the capabilities to reduce airflow drag at high vehicle speeds according to the present invention.

The Hyperloop transport system is known, which includes an overhead pipeline located on supports, inside which single transport capsules move. At the front of the capsule there is a blower with a compressor. Behind them, there is a compartment for passengers, and batteries are located in the tail. Special guides located in the front of the transport capsule and the blower redirect the oncoming air flow under the bottom, which allows to create an air cushion under the capsule under the forevacuum conditions. The capsule is driven by a linear electric motor, wherein an aluminum rail serving as the stator is installed in the pipeline at a certain interval. Rotor is located in each capsule. Since the stator performs not just acceleration, but also braking, in the latter case, the kinetic energy of the capsule is also converted to electric energy [4].

The disadvantages of such transport system are the complexity of control, of ensuring stabilization of the transport capsule during movement and preventing its rotation around its own axis.

The closest in technical essence and achieved positive result is transport complex by Yunitski, which includes a self-propelled wheeled vehicle containing a body with a power unit for moving along a track structure prestressed by tensioning, located in a sealed tunnel equipped with gates at stops. Tunnel is made in the form of tube prestressed in longitudinal direction by tensile force [5].

The disadvantage of this transport complex is its insufficient efficiency, due to the need to create a deep vacuum in the tunnel of the track structure and the need to equip the power unit of the self-propelled wheeled vehicle with a bulky system for ensuring its movement, which represents containers with communications for the reserve of fuel and energy components and occupies a significant part of the volume and weight of the vehicle.

The invention is based on achieving the following goals:

- reduction of energy consumption to ensure vehicle movement at a speed exceeding 1,000 km/h;
- increase of vehicle volume utilization efficiency.

## Summary of invention

The technical goal according to the object of the invention is achieved by means of hyper speed transport complex by Yunitski, which includes a self-propelled wheeled vehicle comprising a body with a power unit for moving along a prestressed by tensioning track structure, located in a sealed tunnel equipped with gates at stops, wherein the power unit is made in the form of a hydrogen engine, connected by gas tube line to gas intake device, and the tunnel is filled with hydrogen under pressure P, Pa, which is within the following range:

$$500 \leq P \leq 15,000,$$

whereas the vehicle is equipped with system to supply hydrogen engine with oxidizer, including tank with oxidizer, and the tunnel is made in the form of a tube prestressed in longitudinal direction by tensile force, and the vehicle body is made in the form of a body of rotation and positioned equidistantly to the internal surface of the tunnel.

Successful achievement of the technical aim is secured also by the fact that the hydrogen engine is made in form of internal combustion engine.

The mentioned result is also achieved thanks to the fact that the hydrogen engine is made in form of fuel cells.

The solution is also ensured in the way that oxygen is used as an oxidizer.

Achievement of said result is also ensured by the fact that the tunnel has a circular section with thickness h, m, of the wall, determined by the ratio:

$$0.05 \leq h/R \leq 0.5,$$

where $R$, m - inner radius of tunnel.

This result is also achieved by the fact that the vehicle is located in a tunnel with a circular clearance $\delta$, m, determined by the ratio:

$$0.1 \leq \delta/R \leq 1$$

The solution of the task is also ensured by the fact that the tunnel is located on overpass, and/or in water column, and/or underground.

The said result is also achieved by the fact that the tunnel is made with neutral buoyancy relative to the external environment of its placement.

The solution to the problem is also attained under condition that the tunnel is directed downhill at the start of the movement and uphill at the end of the movement of the vehicle, which allows to recuperate the work (the recovered energy of the movement of the vehicle) and use power unit of reduced output.

Achievement of said result is also ensured by the fact that the slope of the tunnel is configured to impart to the vehicle, under the influence of gravity, acceleration $a$, m/s$^2$, determined by the ratio:

$$0.01 \leq a/g \leq 0.25,$$

where g, m/s$^2$ - acceleration of gravity.

The above result is also achieved by the fact that the forebody and afterbody of the vehicle are made conical with S-shaped form of the profile.

The solution of the given problem is also attained provided that the generatrices of the body profile are curvilinear with alternating curvature or totality of rectilinear and curvilinear sections positioned with sign-variable direction.

Achievement of the aforementioned result is also ensured by the fact that the gas intake device is located on top of the conical portion of the body.

## Brief description of drawings

The essence of the present invention is illustrated by the drawings, Figs. 1 - 20, showing the following:

Fig. 1 - layout image of hyper speed transport complex by Yunitski - fragment of general view (embodiment);
Fig.2 - layout image of cross-section of tunnel and track structure with vehicle (embodiment);
Fig.3 - layout image of variant of power unit and vehicle support system (embodiment);
Fig.4 - layout image of vehicle variant (front view);
Fig.5 - layout image of vehicle variant (isometric view);
Fig.6 - layout image of vehicle variant (side view);
Fig.7 - layout image of cross-section of tunnel and track structure with vehicle (embodiment - in two rows, on supports at the same level above the earth's surface, with solar panels and communication and transport channels);
Fig.8 - layout image of cross-section of tunnel and track structure with vehicle (embodiment - in two rows, in vertical plane, on supports above the earth's surface);
Fig.9 - layout image of cross-section of tunnel and track structure with vehicle (embodiment - in two rows, in vertical plane, one - on supports above the earth's surface, the other - in earth stratum);
Fig. 10 - layout image of cross-section of tunnel and track structure with vehicle (embodiment - in two rows, in banked ground on the earth's surface);
Fig. 11 - layout image of cross-section of tunnel and track structure with vehicle (embodiment - in two rows, in earth stratum);
Fig. 12 - layout image of cross-section of tunnel and track structure with vehicle (embodiment - in two rows, in water at the same level);

Fig. 13 - layout image of cross-section of tunnel and track structure with vehicle (embodiment - in two rows, under water, in bottom soil);

Fig. 14 - layout image of cross-section of tunnel and track structure with vehicle (embodiment - in two rows, under water, in banked ground at the bottom of the water reservoir);

Fig. 15 - layout image of embodiment of tunnel arrangement on truss overpass above ground surface (frontal view);

Fig. 16 - layout image of embodiment of tunnel arrangement on supports above ground surface (frontal view);

Fig. 17 - layout image of embodiment of tunnel arrangement (with neutral buoyancy) in water (frontal view);

Fig. 18 - layout image of embodiment of tunnel arrangement in earth stratum (frontal view);

Fig.19 - layout image of embodiment of tunnel arrangement with transition sections - underground, underwater and aboveground;

Fig.20 - layout image of fragment of general view of hyper speed transport complex by Yunitski with gate chambers and stations (embodiment).

Positions on Figures:

1 - vehicle;
2 - body;
3 - power unit;
3.1 - hydrogen engine;
3.2 - gas tube line;
3.3 - gas intake device;
4 - system for supplying oxidizer to power unit;
4.1 - oxidizer;
4.2 - tank;
5 - track structure;
6 - wheel;
7 - rail cord;
7.1 - load-bearing element of rail cord;
7.2 - body of rail cord;
7.3 - hardening material of rail cord;
8 - tunnel;
8.1 - tube;
8.2 - load-bearing element of tunnel tube;
9 - foundation;
10 - support;
11 - station;
12 - truss overpass;
13 - banked ground;
14 - water;
15 - float;
16 - anchor latch;
17 - element connecting float, tunnel and anchor latch;

18 - hydrogen;
19 - oxygen;
20 - gate;
21 - communication-transport channel;
22 - solar panels.
$h$, m - thickness of tunnel wall;
$R$, m - inner radius of tunnel;
$\delta$, m - radial clearance around vehicle;
$F$, N - tensile force of track structure, prestressed in longitudinal direction;
$T$, N - tensile force of tunnel tube, prestressed in longitudinal direction;
$A$ - forebody;
$B$ - afterbody;
$C$ - internal surface of tunnel;
$K$ - rolling surface.

**Embodiments of invention**

The essence of the claimed invention is further presented in a closer detail.

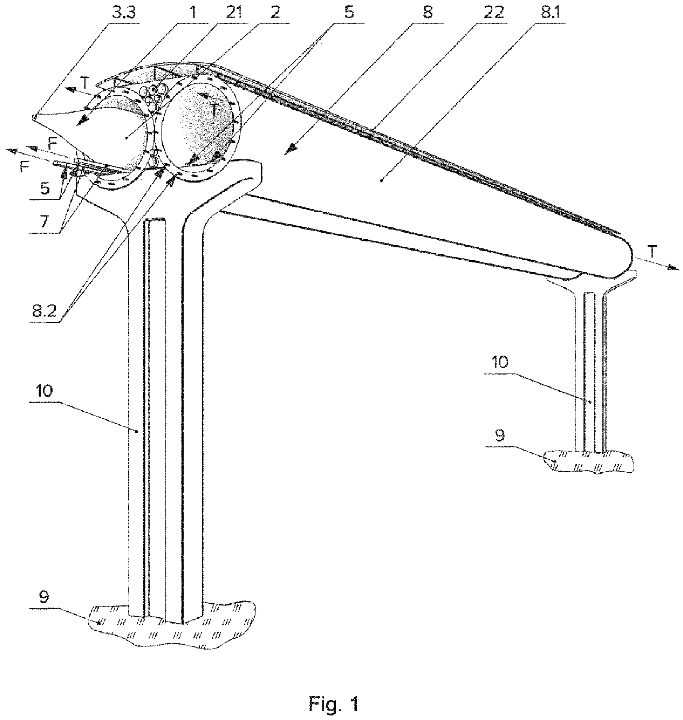

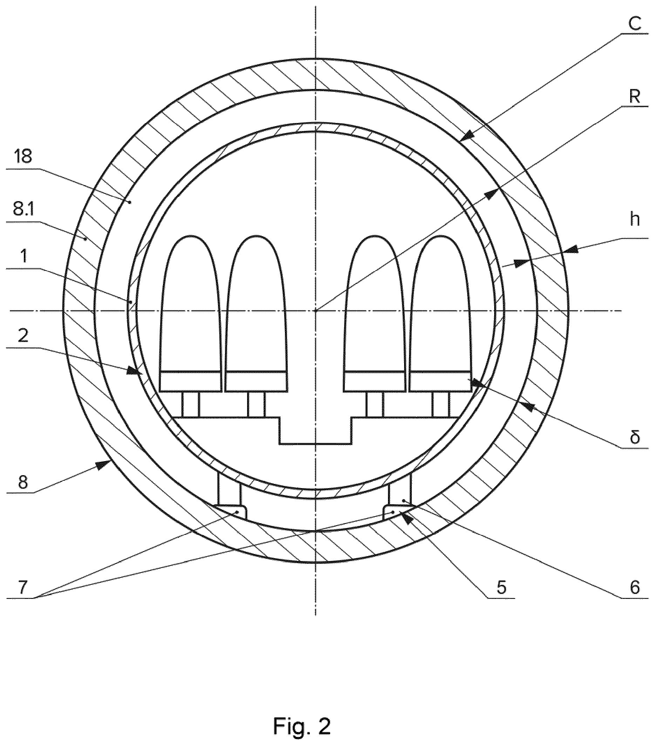

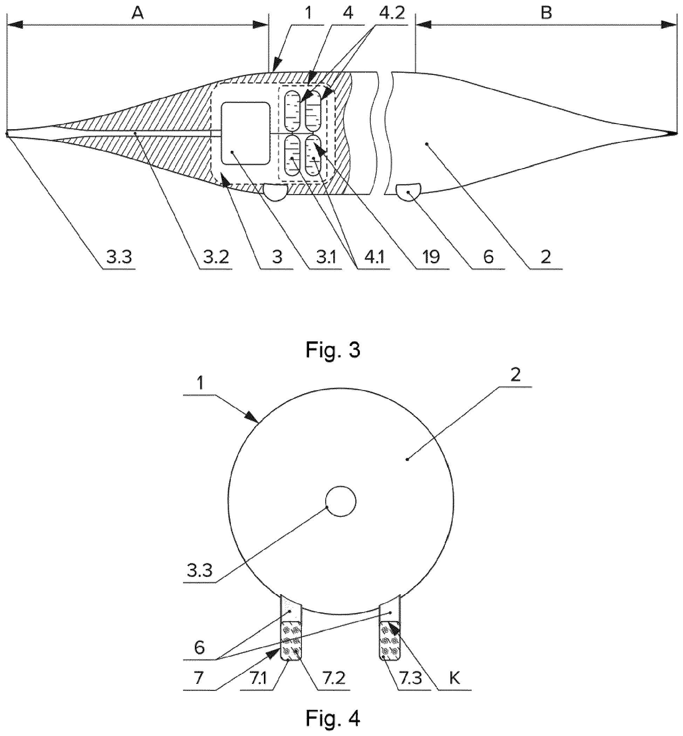

The claimed hyper speed transport complex by Yunitski (see Figs. 1 and 2) includes self-propelled wheeled vehicle 1, containing body 2 with power unit 3 (see Fig. 3).

Power unit 3 of vehicle 1 is made in the form of a hydrogen engine 3.1, connected by gas tube line 3.2 to gas intake device 3.3. Hereby, the vehicle 1 is equipped with system 4 to supply hydrogen engine 3.1 with oxidizer 4.1, including tanks 4.2 with oxidizer 4.1 (see Fig. 3).

Power unit 3 enables the movement of vehicle 1 along the track structure 5, prestressed in longitudinal direction (by tensile force $F$, N), on which vehicle 1 is mounted (see Figs.1 - 3).

Using, as a propulsion unit of vehicle 1, of metal, for example, steel wheels 6 in combination with a similar design and track structure 5 of the transport complex, for example, with a steel rolling surface $K$ (see Fig. 4), minimizes friction and elastic deformation losses in the rail-wheel contact zone and thereby optimizes the cost of implementing transport system, which, in the modern state of the art, is the most reliable, safe and efficient one for large-scale movement of passengers and cargos over significant distances with high speed.

In accordance with any of nonlimiting embodiments of the claimed transport complex, one of its main elements is track structure 5 in the form of rail cords 7, prestressed by tensioning in the longitudinal direction, for example, in the form of appropriately prestressed load-bearing elements 7.1, positioned, for example, in body 7.2 of rail cord 7, and representing twisted and/or untwisted ropes, cables, wire, bands and and/or other extended elements from any high-strength materials (see Fig. 4).

The above-mentioned load-bearing elements 7.1 of rail cord 7 can technically be combined into load-bearing structure, and the void space in body 7.2 of rail cord 7 among its load-bearing elements 7.1 can be filled with hardening material 7.3. (see Fig. 4) based on polymer binders, composites or cement mixtures (not shown on Figs.), which rigidly connect load-bearing elements into load-bearing structure, cementing thereby rail cord 7 of track structure 5 into one whole.

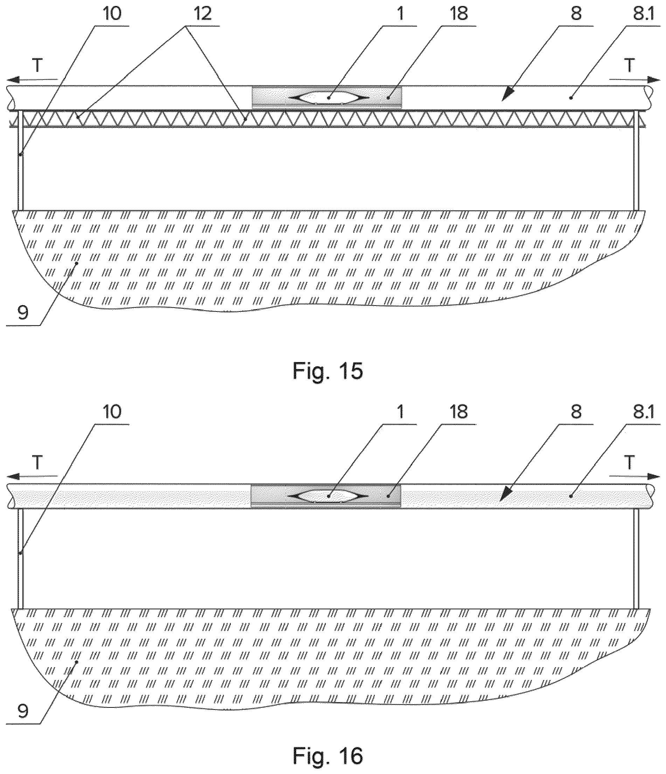

The track structure 5 is positioned in a tunnel 8. The tunnel 8 is made in the form of sealed tube 8.1, prestressed in longitudinal direction by load-bearing elements 8.2, tensioned by force T, N (see Figs. 1 and 15).

As load-bearing elements 8.2 of the tunnel 8, the components may be used which are similar to the load-bearing elements 7.1 of rail cord 7, mentioned above.

The construction of the track structure 5 and tunnel 8 of the transport complex of innovative modification - prestressed by tensioning in the longitudinal direction, allows to achieve significant advantages compared to the known technical solutions. In particular, it allows to achieve the required straightness of the track structure 5, increase its rigidity and reduce material capacity while ensuring compensation for thermal expansion of both track structure 5 and tunnel 8, and thereby guarantee increased reliability and efficiency of the transport complex as a whole.

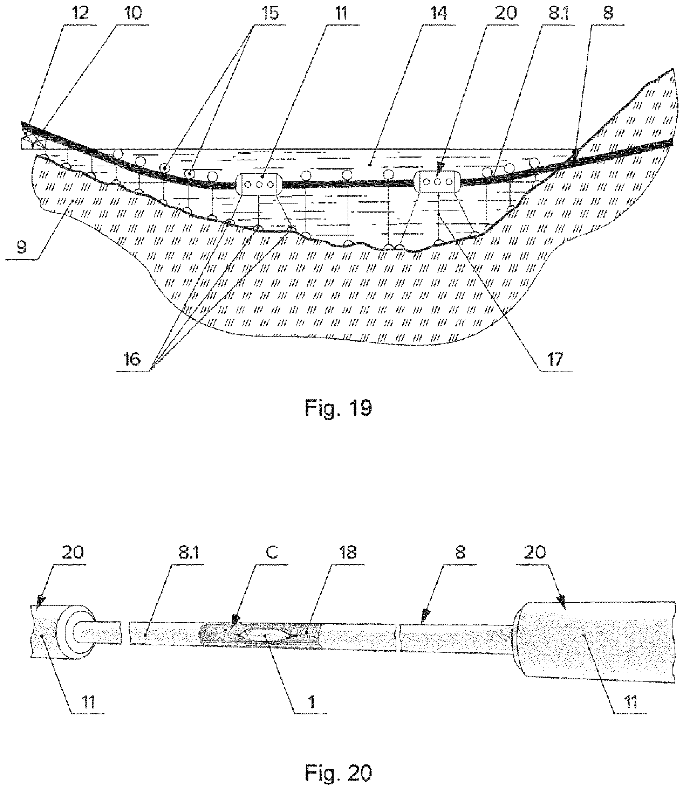

Depending on the design option, tunnel 8 can be located both on land and/or in water column 15, and/or can be located underground (see Fig.19).

Depending on the properties of the foundation 9, on the location, the set of functions and the design, sealed tube 8.1 of tunnel 8 can be placed on foundation 9 by any known methods.

An embodiment for positioning the tunnel 8 on land is to place it on supports 10.

The supports 10 may be steel and reinforced concrete columnar (see Figs. 1, 7, 8 and 16) and frame structures, buildings and constructs specially equipped with stations 11 (depots, stops) and/or cargo terminals.

An embodiment of transport complex is location of sealed tubes 8.1 of tunnels 8 in two rows, on supports above ground surface at the same level (see Figs.1, 7 and 16).

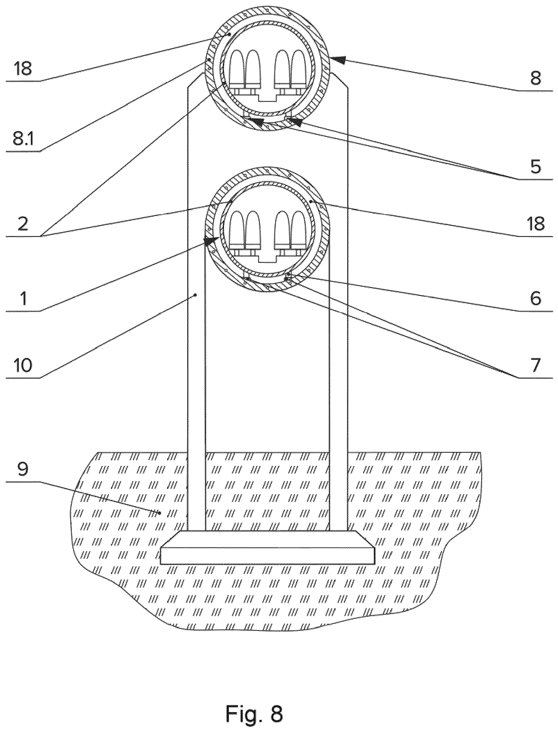

An alternative embodiment of the transport complex is the arrangement of sealed tubes 8.1 of tunnels 8 in two rows, in a vertical plane, on supports above the ground surface (see Fig.8).

Also, the tunnel 8 can be positioned, for example, on the overpass 12 (see Fig. 15).

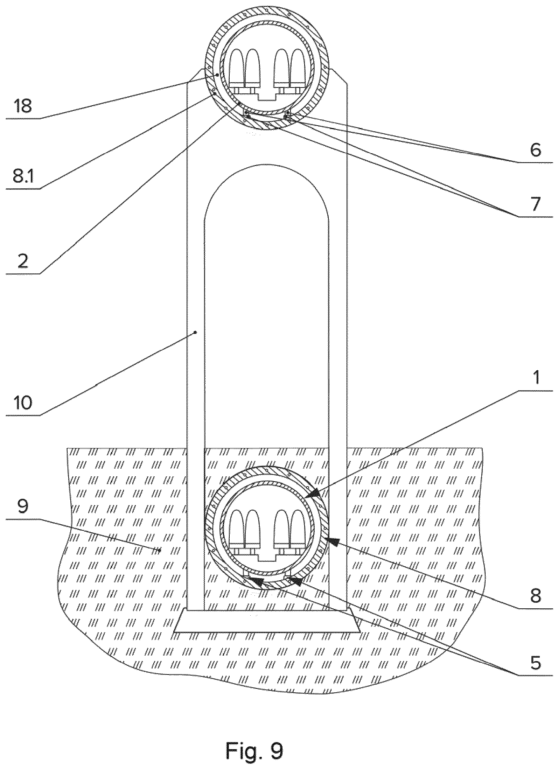

By analogy, the tunnels 8 of the transport complex can be located in two rows, in a vertical plane, for example, one - on supports 10 above the surface of earth, the second - in earth stratum (see Fig.9).

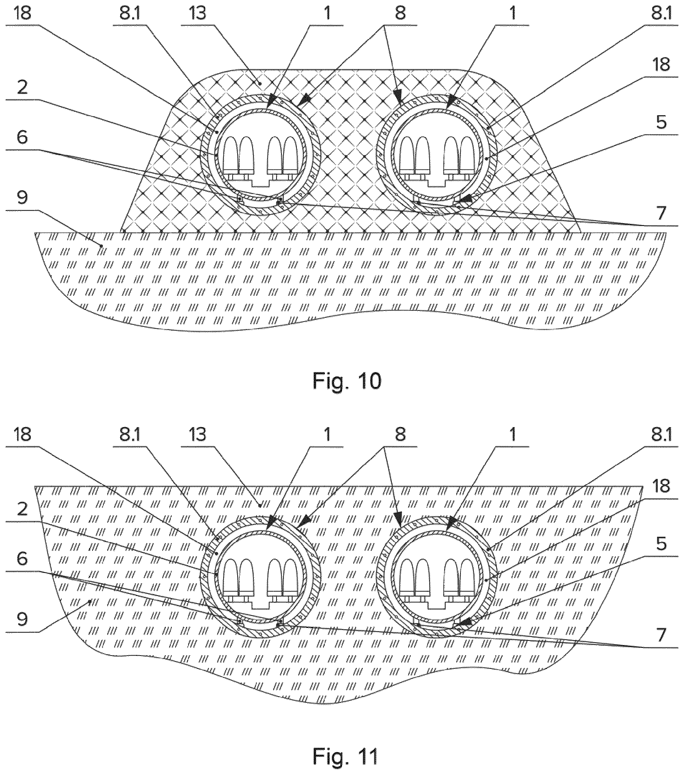

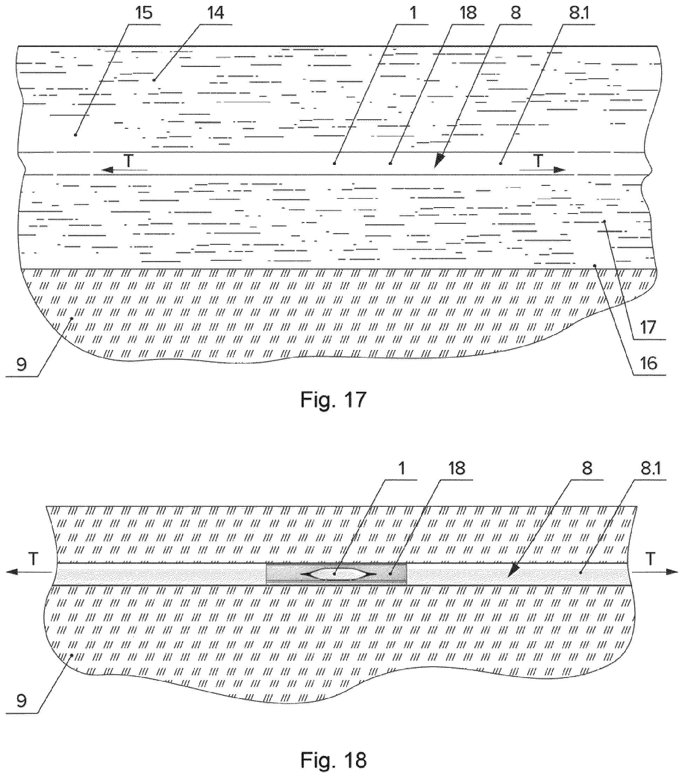

Another of many possible embodiments of the transport complex is to arrange the sealed tubes 8.1 of the tunnels 8 in two rows, in earth stratum (see Figs. 11 and 18).

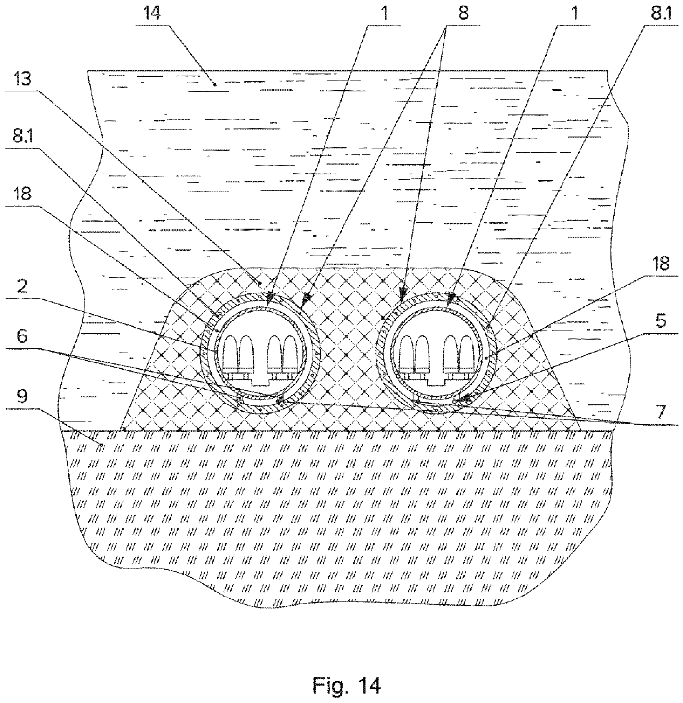

An embodiment of the transport complex is the arrangement of the sealed tubes 8.1 of the tunnels 8 on the prepared foundation 9 in two rows, in banked ground 13 on the surface of earth (see Fig. 10) and/or under water 14 (see Fig. 14).

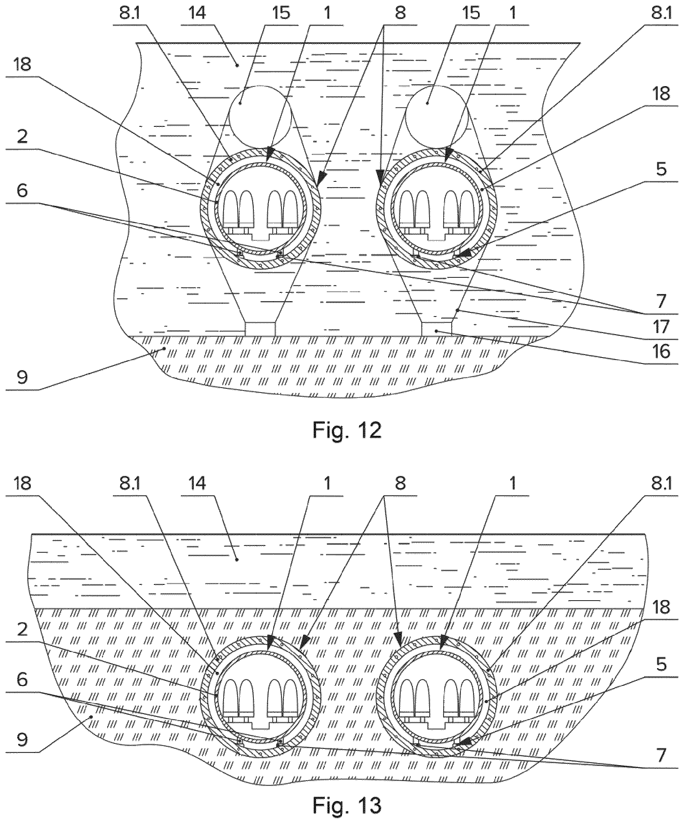

The sealed tube 8.1 of the tunnel 8, depending on the design option, can be placed in water column 14 (see Figs. 12 and 17) and/or along the bottom of the reservoir (see Fig. 13).

At the same time, depending on the embodiment in any of alternative variants of transport complex in water 14, the sealed tube 8.1 of the tunnel 8 can be made with neutral buoyancy, including due to the floats 15, anchor latches 16 and elements 17 connecting them with each other and with the sealed tube 8.1 (see Figs.12, 17 and 19).

With any practical implementation of the location and design of the tunnel 8, the required straightness, tightness, safety and stability of the track structure 5 is achieved throughout the entire transport complex.

Furthermore, the tunnel may be directed downhill at the start of the movement and uphill at the end of the movement of the vehicle 1 (see Fig. 19). This allows to save energy, use a smaller power unit and increase the useful volume of the body 2 of vehicle This allows to save energy, use a smaller power unit and increase the useful volume of the body 2 of vehicle 1. Moreover, in this case, the slope of the tunnel 8 is made in such a way that it is possible to impart to the vehicle 1 acceleration $a$, m/s$^2$, under the influence of gravity, determined by the ratio:

$$0.01 \leq a/g \leq 0.25, \qquad (1)$$

where $g$, m/s$^2$ - acceleration of gravity.

When configuring the tunnel 8 downhill at the start of the movement and uphill at the end of the movement of the vehicle 1, energy savings are achieved during the operation of the transport complex.

If the ratio (1) is less than 0.01, then substantial energy consumption is further required to ensure the speed of the vehicle 1.

If the ratio (1) is more than 0.25, overload occurring during acceleration and deceleration of the vehicle 1 may cause discomfort for passengers.

The design and operation of the proposed hyper speed transport complex are based on the identical dependence of the speed of sound propagation in the gaseous medium on its atomic weight. The lower the atomic weight of the gas, the higher the speed of sound therein and the higher its subsonic speed can be.

At the same time, the lower the drag of the body moving in the gas, the less energy is required to ensure its hyper speed movement.

Due to the fact that in the proposed technical solution, the power unit 3 of vehicle 1 is made in the form of hydrogen engine 3.1 connected by gas tube line 3.2 with gas intake device 3.3, and tunnel 8 is filled with hydrogen 18 under pressure $P$, Pa, which is within the limits:

$$500 \leq P \leq 15{,}000, \qquad (2)$$

it is possible during movement to simultaneously supply fuel (hydrogen 18) to power unit 3 and decrease drag of vehicle 1. At the same time, the useful volume of the vehicle 1 configured to accommodate passengers and/or goods increases, and the volume of the vehicle 1 configured to accommodate the power unit 3 significantly decreases.

The values indicated in the expression (2) distinguish the optimum range of hydrogen pressure 18 in the tunnel 8 and allow to ensure without much effort the performance characteristics of the hyper speed transport complex, which results in minimizing the cost of overcoming the resistance to high-speed movement of the vehicle 1, provided that its power unit 3, made in the form of a hydrogen engine 3.1, is in uninterrupted operation.

If the expression (2) is less than 500, then it is impossible to ensure stable operation of the power unit 3 of the vehicle 1 due to the effect of fuel "starvation" of the hydrogen engine 3.1 due to depletion of the fuel mixture with the main fuel component - hydrogen 18.

If the expression (2) is more than 15,000, the drag of the gas medium of the tunnel 8 on the vehicle 1 increases substantially.

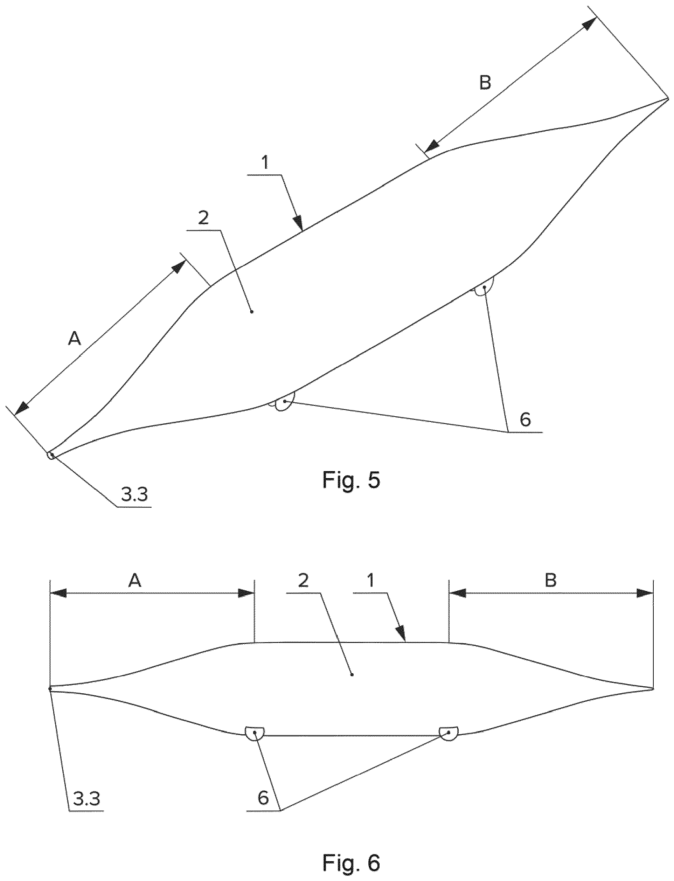

Advantageously, the body 2 of the vehicle 1 is made in the form of a body of revolution (Figs. 4-6) and is equidistantly positioned to the internal surface C of the tunnel 8 (see Fig. 2). Such configuration and arrangement of the vehicle 1, in turn, helps to reduce the energy consumption when the supersonic speed is reached when the vehicle 1 travels along the track structure 5 of the proposed hyper speed transport complex by Yunitski.

As noted above, in order to operate the hydrogen engine 3.1, in any alternative embodiment thereof, the body 2 of the vehicle 1 is equipped with a system for supplying the hydrogen engine 3.1 with an oxidizer 4.1, which includes an oxidizer tank 4.2 communicating with the hydrogen engine 3.1 (see Fig. 3).

Depending on the design option, oxygen 19 can be used as oxidant 4.1. At the same time, as a result of the operation of the hydrogen engine 3.1, an environmentally friendly product - water - will be released. In addition, when using liquid oxygen 19 as oxidizer 4.1, due to the use of a temperature difference during the phase transition of oxidizer 4.1 from a liquid to a gaseous state, the issues of conditioning the interior of vehicle 1 and, if necessary, cooling the engine and brakes are easily solved.

In any of the nonlimiting alternative variants of possible use under the proposed technical solution, other oxidizers 4.1, for example, can be used: hydrogen peroxide, fluorine, chlorine and/or other compounds (not shown on Figures) selected among the known ones within the scope of entire combination of essential features of the present invention.

According to any of the nonlimiting embodiments of the claimed hyper speed transport complex by Yunitski, the hydrogen engine 3.1 may be embodied in the form of, for example, an internal combustion engine or fuel cells.

In order to ensure the continuous operation of the transport complex and the tightness of the tunnel 8 on the sections between the stations 11, its sealed tube 8.1 is provided with gates 20 (see Figs. 19 and 20).

Hereby, the tunnel 8 is made (see Fig. 2) in the form of a sealed tube 8.1 of circular section and with thickness $h$, m, of wall determined by the ratio:

$$0.05 \leq h/R \leq 0.5, \qquad (3)$$

where $R$, m - inner radius of tunnel 8.

When the tunnel 8 is made in the form of a sealed tube 8.1 of circular section with thickness $h$, m, of wall corresponding to the values indicated in the ratio (3), it is enough to simply ensure the required shape and integrity of the tunnel 8, even if forevacuum (vacuum) is created therein, including under earthquakes and other dynamic influences.

If the ratio (3) is less than 0.05, then in order to ensure the tightness and integrity of the sealed tube 8.1 of the tunnel 8, it will be necessary to use expensive high-strength materials and complex design solutions which entails a significant increase in the cost of the entire transport complex.

If the ratio (3) is more than 0.5, there is an unjustified overrun of the materials used to construct the sealed tube 8.1 of the tunnel 8.

To reduce the aerodynamic drag of the vehicle 1 on the track structure 5 inside the tunnel 8 and to simplify maintaining the required pressure $P$, Pa, of hydrogen 18 therein, it is advisable that the vehicle 1 be placed in the tunnel 8 with a circular clearance $\delta$, m, determined by the ratio:

$$0.1 \leq \delta/R \leq 1 \qquad (4)$$

If the ratio (4) is less than 0.1, a shielding effect is observed between the internal surface C (see Fig. 2) of the tunnel 8 and the side surface of the body 2 of the vehicle 1, which leads to an unacceptable increase in aerodynamic drag on the vehicle 1.

If the ratio (4) is greater than 1, substantial additional time and energy costs will be required to ensure that the hydrogen pressure 18 in the tunnel 8 is maintained in the operating range indicated in the expression (1), all other things being equal. In addition, the diameter of the tunnel will significantly increase, which will increase its cost.

The requirements to minimize the aerodynamic drag of the vehicle 1 to the movement along the track structure 5 inside the tunnel 8 determine the selection of the profile of the vehicle 1 and the location of the gas intake device 3.3 thereon (see Figs. 3 -6).

As a result of the studies of the aerodynamic characteristics of the scale model of the body 2 of the vehicle 1, which were carried out in the wind tunnel, it was possible to optimize the technical parameters of the body 2 of the vehicle 1.

According to the test results, the forebody *A* and afterbody *B* of the body 2 of the vehicle 1 are made conical with a S-shaped profile (see Figs. 3, 5 and 6).

Noteworthy, that body 2 profile generatrices are made curvilinear with alternating curvature or totality of rectilinear and curvilinear sections arranged with sign-variable direction.

Advantageously, the gas intake device 3.3 is positioned at the apex of the front cone-shaped portion of the body 2 (see Figs. 1, 3 - 6).

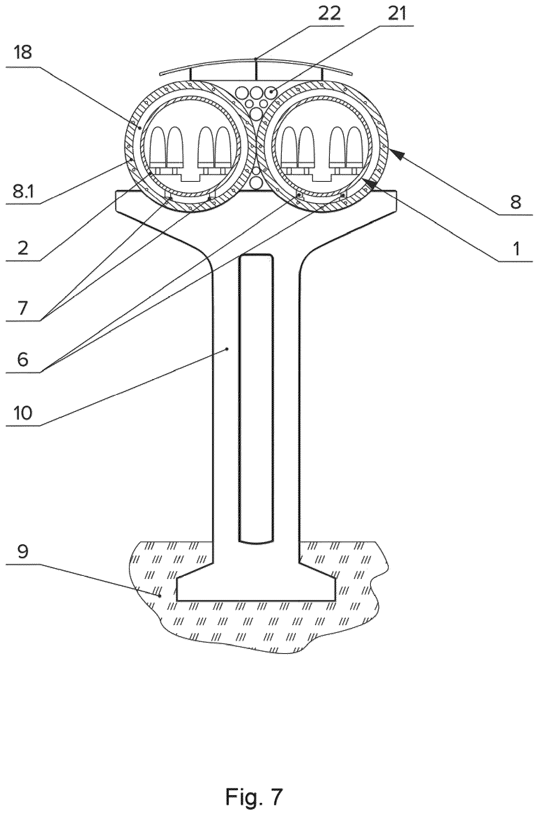

In the hyper speed transport complex according to the present invention, it may be feasible to arrange and install, as shown on Figs. 1 and 7, communication and transport channels 21 and solar panels 22, which make it possible to increase the efficiency of using the infrastructure of the transport complex by conveying various liquids or gases through communication and transport channels 21, or using them for laying energy networks, as well as by generating electricity at environmentally friendly power plants.

**Industrial applicability**

Design of the claimed hyper speed transport complex by Yunitski provides for the construction of a sealed tunnel 8 of circular section, for example - in the form of the tube 8.1, provision thereof at stations 11 by gates 20, and construction in the tunnel 8 of rail cords 7 of the track structure 5. Hereby, the sealed tube 8.1 of the tunnel 8 is embodied with defined thickness *h*, m, of wall, and on the rail cords 7 of the track structure 5, equidistantly to the internal surface *C* of the tunnel 8, a self-propelled vehicle 1 is installed on wheels 6, containing body 2 with power unit 3 in the form of hydrogen engine 3.1 for movement of vehicle 1 along the track structure 5, which is embodied in the same way, as the tube 8.1 of the tunnel 8 - prestressed in longitudinal direction by tensile forces, respectively: *F*, N, and *T*, N. The tunnel 8 is filled with hydrogen 18 under defined pressure, and in the body 2 of vehicle 1, in its S-shaped conical portion, the gas intake device 3.3 of the power unit 3 is located.

When vehicle 1 moves, hydrogen 18 from tunnel 8 through gas intake device 3.3 connected by gas tube line 3.2 to hydrogen engine 3.1 enters, for example, the fuel mixture preparation chamber (not shown in the figures). At the same time, oxidizer 4.1, for example, oxygen 19, is supplied to this chamber from tank 4.2 of supply system 4 of power plant 3. Prepared fuel mixture is burned in power unit 3 and enables the movement of vehicle 1 along the track structure 5. At the same time, an environmentally friendly product - water - is released.

While the present technical approach describes preferred embodiments of the structure, it is clear that the invention is not limited thereto only and can be implemented using other known structural elements within the scope of the said combination of essential features of the invention as defined by the claims.

The claimed hyper speed transport complex by Yunitski allows to reduce power consumption to ensure vehicle movement at speed exceeding 1,000 km/h and increase its operation efficiency.

Information sources

1. Patent RU 2252881 IPC B60L13/10, B60V3/02, publ. 27.05.2005.
2. Patent RU 2486086 IPC B61B13/08, B61B 15/00, B61B3/02, publ. 27.06.2013.
3. Patent RU 2109647 IPC B61B13/10, publ. 27.04.1998.
4. Internet page: https://ru.wikipedia.org/wiki/Hyperloop - as of 28.08.2018.
5. Yunitski A.E. String transport systems: on Earth and in space. Monograph, 1995, Gomel, - 337 p. with.: ill.: 629.1.072.2:629.7.087.22, Pp.10, 11, 16 and 17, Figs.1.12, 1.13 and 2.1. (Prototype).

**Claims**

1. Hyper speed transport complex, which includes a sealed tunnel (8) equipped with gates (20) at stops and a self-propelled wheeled vehicle (1) comprising a body (2) with a power unit (3) for moving along a prestressed by tensioning track structure (5), located in the sealed tunnel equipped with gates at stops, whereas the power unit is made in the form of a hydrogen engine (3.1), connected by gas tube line (3.2) to gas intake device (3.3), and the tunnel is filled with hydrogen (18) under pressure *P*,

   whereas the vehicle is equipped with system to supply the hydrogen engine with oxidizer (4.1), including a tank (4.2) with oxidizer, and the vehicle body is made in the form of a body of rotation and positioned equidistantly to the internal surface of the tunnel, ***characterized in that*** the pressure P is within the following range:

   $$500 \text{ Pa} \leq P \leq 15000 \text{ Pa},$$

   and ***in that*** the tunnel is made in form of a tube prestressed in longitudinal direction by tensile force.

2. Transport complex according to claim 1, ***character-***

*ized in that* the hydrogen engine is made in form of internal combustion engine.

3. Transport complex according to claim 1, *characterized in that* the hydrogen engine is made in form of fuel cells.

4. Transport complex according to claim 1, *characterized in that* oxygen (19) is used as an oxidizer.

5. Transport complex according to claim 1, *characterized in that* the tunnel has a circular section with thickness $h$, measured in meters, of the wall, determined by the ratio:

$$0.05 \leq h/R \leq 0.5,$$

where $R$, measured in meters, represents the inner radius of tunnel.

6. Transport complex according to any of claims 1 and 5, *characterized in that* the vehicle is located in the tunnel with a circular clearance $\delta$, measured in meters, determined by the ratio:

$$0.1 \leq \delta/R \leq 1$$

7. Transport complex according to claim 1, *characterized in that* the tunnel is located on overpass, and/or in water (14) column, and/or underground.

8. Transport complex according to any of claims 1 and 7, *characterized in that* the tunnel is made with neutral buoyancy relative to the external environment of its placement.

9. Transport complex according to claim 1, *characterized in that* the tunnel is directed downhill at the start of the movement and uphill at the end of the movement of the vehicle.

10. Transport complex according to claim 9, *characterized in that* the slope of the tunnel is configured to impart to the vehicle, under the influence of gravity, acceleration $a$, measured in m/s$^2$, determined by the ratio:

$$0.01 \leq a/g \leq 0.25,$$

where $g$, expressed in m/s$^2$, is the acceleration of gravity.

11. Transport complex according to claim 1, *characterized in that* the forebody and afterbody of the vehicle are made conical with S-shaped form of the profile.

12. Transport complex according to any of claims 1 and 11, *characterized in that* the generatrices of the body profile are curvilinear with alternating curvature or totality of rectilinear and curvilinear sections positioned with sign-variable direction.

13. Transport complex according to any of claims 1 and 11, *characterized in that* the gas intake device is located on top of the conical portion of the body.

**Patentansprüche**

1. Hypergeschwindigkeits-Transportkomplex, der einen abgedichteten Tunnel (8), der mit Toren (20) an Haltestellen ausgestattet ist, und ein selbstangetriebenes Radfahrzeug (1) enthält, das einen Körper (2) mit einer Antriebseinheit (3) aufweist, um sich entlang einer durch Spannen vorgespannten Schienenstruktur (5) zu bewegen, die sich in dem abgedichteten Tunnel befindet, der mit Toren an Haltestellen ausgestattet ist, wobei die Antriebseinheit in Form eines Wasserstoffmotors (3.1) gefertigt ist, der durch eine Gasrohrleitung (3.2) mit einer Gasansaugvorrichtung (3.3) verbunden ist, und der Tunnel mit Wasserstoff (18) unter Druck $P$ gefüllt ist,

   wobei das Fahrzeug mit einem System ausgestattet ist, um den Wasserstoffmotor mit einem Oxidationsmittel (4.1) zu versorgen, enthaltend einen Tank (4.2) mit Oxidationsmittel, und der Fahrzeugkörper in Form eines Rotationskörpers gefertigt ist und äquidistant zu der Innenfläche des Tunnels positioniert ist,
   *dadurch gekennzeichnet, dass der Druck P in dem folgenden Bereich liegt:*

$$500\ \text{Pa} \leq P \leq 15.000\ \text{Pa},$$

   und *dadurch, dass* der Tunnel in Form eines Rohrs gefertigt ist, das in Längsrichtung durch Zugkraft vorgespannt ist.

2. Transportkomplex nach Anspruch 1, *dadurch gekennzeichnet, dass* der Wasserstoffmotor in Form eines Verbrennungsmotors gefertigt ist.

3. Transportkomplex nach Anspruch 1, *dadurch gekennzeichnet, dass* der Wasserstoffmotor in Form von Brennstoffzellen gefertigt ist.

4. Transportkomplex nach Anspruch 1, *dadurch gekennzeichnet, dass* Sauerstoff (19) als Oxidationsmittel verwendet wird.

5. Transportkomplex nach Anspruch 1, **dadurch gekennzeichnet, dass** der Tunnel einen kreisförmigen Querschnitt mit einer in Metern gemessenen Dicke h der Wand aufweist, die bestimmt wird durch das Verhältnis:

$$0{,}05 \leq h/R \leq 0{,}5,$$

wobei R, gemessen in Metern, den Innenradius des Tunnels repräsentiert.

**6.** Transportkomplex nach einem der Ansprüche 1 und 5, *dadurch gekennzeichnet, dass* sich das Fahrzeug in dem Tunnel mit einem in Metern gemessenen, kreisförmigen Abstand $\delta$ befindet, der bestimmt wird durch das Verhältnis:

$$0{,}1 \leq \delta/R \leq 1$$

**7.** Transportkomplex nach Anspruch 1, *dadurch gekennzeichnet, dass* sich der Tunnel auf einer Überführung und/oder in einer Säule aus Wasser (14) und/oder im Untergrund befindet.

**8.** Transportkomplex nach einem der Ansprüche 1 und 7, *dadurch gekennzeichnet, dass* der Tunnel mit neutralem Auftrieb in Bezug auf die äußere Umgebung seiner Platzierung gefertigt ist.

**9.** Transportkomplex nach Anspruch 1, *dadurch gekennzeichnet, dass* der Tunnel zu Beginn der Bewegung des Fahrzeugs abwärts und am Ende der Bewegung aufwärts gerichtet ist.

**10.** Transportkomplex nach Anspruch 9, *dadurch gekennzeichnet, dass* die Neigung des Tunnels konfiguriert ist, um dem Fahrzeug unter dem Einfluss der Schwerkraft eine in m/s$^2$ gemessene Beschleunigung a zu verleihen, die bestimmt wird durch das Verhältnis:

$$0{,}01 \leq a/g \leq 0{,}25,$$

wobei g, ausgedrückt in m/s$^2$, die Erdbeschleunigung ist.

**11.** Transportkomplex nach Anspruch 1, *dadurch gekennzeichnet, dass* der Vorderkörper und der Hinterkörper des Fahrzeugs konisch mit S-förmiger Form des Profils gefertigt sind.

**12.** Transportkomplex nach einem der Ansprüche 1 und 11, *dadurch gekennzeichnet, dass* die Generatrizen des Körperprofils bogenförmig mit alternierender Krümmung oder einer Gesamtheit von geradlinigen und bogenförmigen Abschnitten sind, die mit vorzeichenvariabler Richtung positioniert sind.

**13.** Transportkomplex nach einem der Ansprüche 1 und 11, *dadurch gekennzeichnet, dass* sich die Gasansaugvorrichtung auf dem konischen Abschnitt des Körpers befindet.

**Revendications**

**1.** Complexe de transport à hyper-vitesse, qui inclut un tunnel étanche (8) équipé de portes (20) aux arrêts et un véhicule sur roues automoteur (1) comprenant une carrosserie (2) avec une unité motrice (3) pour se déplacer le long d'une structure de voie précontrainte par tension (5), situé dans le tunnel étanche équipé de portes aux arrêts, considérant que l'unité motrice est réalisée sous la forme d'un moteur à hydrogène (3.1), relié par une conduite de gaz (3.2) à un dispositif d'admission de gaz (3.3), et le tunnel est rempli d'hydrogène (18) sous pression P,

considérant que le véhicule est équipé d'un système pour alimenter le moteur à hydrogène en oxydant (4.1), incluant un réservoir (4.2) d'oxydant, et la carrosserie de véhicule est réalisée sous la forme d'un corps de rotation et positionnée à égale distance de la surface interne du tunnel,
**caractérisé en ce que** la pression P est comprise dans la plage suivante :

$$500 \text{ Pa} \leq P \leq 15\,000 \text{ Pa,}$$

et **en ce que** le tunnel est réalisé sous la forme d'un tube précontraint dans le sens longitudinal par force de traction.

**2.** Complexe de transport selon la revendication 1, *caractérisé en ce que* le moteur à hydrogène est réalisé sous la forme d'un moteur à combustion interne.

**3.** Complexe de transport selon la revendication 1, *caractérisé en ce que* le moteur à hydrogène est réalisé sous la forme de piles à combustible.

**4.** Complexe de transport selon la revendication 1, *caractérisé en ce que* l'oxygène (19) est utilisé comme oxydant.

**5.** Complexe de transport selon la revendication 1, *caractérisé en ce que* le tunnel présente une section circulaire d'épaisseur *h*, mesurée en mètres, de la paroi, déterminée par le rapport :

$$0{,}05 \leq h/R \leq 0{,}5,$$

dans lequel R, mesuré en mètres, représente le rayon interne du tunnel.

6. Complexe de transport selon l'une quelconque des revendications 1 et 5, *caractérisé en ce que* le véhicule est situé dans le tunnel avec un dégagement circulaire δ, mesuré en mètres, déterminé par le rapport :

$$0,1 \leq \delta/R \leq 1$$

7. Complexe de transport selon la revendication 1, *caractérisé en ce que* le tunnel est situé sur un pont, et/ou dans une colonne d'eau (14), et/ou sous terre.

8. Complexe de transport selon l'une quelconque des revendications 1 et 7, *caractérisé en ce que* le tunnel est réalisé avec une flottabilité neutre par rapport à l'environnement extérieur de son emplacement.

9. Complexe de transport selon la revendication 1, *caractérisé en ce que* le tunnel est orienté en descente en début du déplacement et en montée en fin du déplacement du véhicule.

10. Complexe de transport selon la revendication 9, *caractérisé en ce que* la pente du tunnel est configurée pour conférer au véhicule, sous l'influence de la gravité, une accélération a, mesurée en m/s², déterminée par le rapport :

$$0,01 \leq a/g \leq 0,25,$$

dans lequel g, exprimé en m/s², est l'accélération de la gravité.

11. Complexe de transport selon la revendication 1, *caractérisé en ce que* l'avant et l'arrière du véhicule sont réalisés coniques avec une forme de profil en S.

12. Complexe de transport selon l'une quelconque des revendications 1 et 11, *caractérisé en ce que* les génératrices du profil de carrosserie sont curvilignes avec une courbure alternée ou une totalité de sections rectilignes et curvilignes positionnées selon une direction de signalisation variable.

13. Complexe de transport selon l'une quelconque des revendications 1 et 11, *caractérisé en ce que* le dispositif d'admission de gaz est situé au sommet de la partie conique de la carrosserie.

Fig. 1

Fig. 2

Fig. 3

Fig. 4

Fig. 5

Fig. 6

Fig. 7

Fig. 8

18

8.1

2

10

6

7

1

9

8

5

Fig. 9

Fig. 10

Fig. 11

Fig. 12

Fig. 13

Fig. 14

EP 3 974 278 B1

Fig. 15

Fig. 16

Fig. 17

Fig. 18

Fig. 19

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017197639 A1
- RU 2252881
- RU 2486086
- RU 2109647

**Non-patent literature cited in the description**

- **YUNITSKI A.E.** String transport systems: on Earth and in space. *Monograph,* 1995, 337